## Europäisches Patentamt
## European Patent Office
## Office européen des brevets

(19)

(11) Veröffentlichungsnummer: **0 059 366 B1**

(12)

# EUROPÄISCHE PATENTSCHRIFT

(45) Veröffentlichungstag der Patentschrift:
24.07.85

(51) Int. Cl.⁴: **C 01 B 21/14**

(21) Anmeldenummer: 82101158.2

(22) Anmeldetag: 17.02.82

(54) **Verfahren zur kontinuierlichen Herstellung von Hydroxylammoniumsalzen.**

(30) Priorität: 28.02.81 DE 3107702

(43) Veröffentlichungstag der Anmeldung:
08.09.82 Patentblatt 82/36

(45) Bekanntmachung des Hinweises auf die Patenterteilung:
24.07.85 Patentblatt 85/30

(84) Benannte Vertragsstaaten:
BE CH DE FR GB IT LI NL

(56) Entgegenhaltungen:
DE - A - 2 046 197
DE - B - 1 193 923
DE - B - 1 567 832
DE - C - 968 363
DE - C - 1 177 118

(73) Patentinhaber: **BASF Aktiengesellschaft,
Carl-Bosch-Strasse 38, D-6700 Ludwigshafen (DE)**

(72) Erfinder: **Grosskinsky, Otto-Alfred, Dr.,
Semmelweisstrasse 8, D-6700 Ludwigshafen (DE)**
Erfinder: **Frommer, Elmar, Dr., Lisztstrasse 117,
D-6700 Ludwigshafen (DE)**
Erfinder: **Rapp, Guenther, Dr., Mundenheimer
Strasse 174, D-6700 Ludwigshafen (DE)**
Erfinder: **Thomas, Erwin, Borngasse 12,
D-6713 Freinsheim (DE)**

ACTORUM AG

**Beschreibung**

Gegenstand der Erfindung ist ein Verfahren zur kontinuierlichen Herstellung von Hydroxylammoniumsalzen durch katalytische Reduktion von Stickstoffmonoxid mit Wasserstoff in verdünnten wässrigen Lösungen von Mineralsäuren in Gegenwart von suspendierten Edelmetallkatalysatoren bei erhöhter Temperatur in mehreren hintereinander geschalteten Reaktionszonen.

Die Herstellung von Hydroxylammoniumsalzen durch katalytische Reduktion von Stickstoffmonoxid mit Wasserstoff in verdünnten wässrigen Lösungen von Mineralsäure in Gegenwart von suspendierten Edelmetallkatalysatoren ist ein bekanntes Verfahren, das das technisch durchgeführt wird. Eine kontinuierliche Arbeitsweise wird beispielsweise in der DE-C-1 177 118 beschrieben. Hierbei wird eine wässrige Lösung von Mineralsäure, die den Katalysator suspendiert enthält, durch mehrere hintereinander geschaltete Rührkessel geleitet, in jeden Rührkessel ein Gemisch aus Stickstoffmonoxid und Wasserstoff eingeleitet und dem letzten Rührkessel katalysatorhaltige Hydroxylammoniumsalzlösung entnommen. Es hat sich herausgestellt, dass häufig im letzten Rührkessel ein Druckanstieg mit vermehrter Bildung von Distickstoffoxid und Stickstoff sowie eine vermehrte Bildung von Ammoniumsalzen eintritt. Abgesehen davon, dass die vermehrte Bildung von gasförmigen Nebenprodukten unerwünscht ist besteht die Gefahr, dass bei vermehrter Bildung von Distickstoffoxid insbesondere bei einer Arbeitsweise unter erhöhtem Druck ein explosibles Gemisch entsteht. Auch die vermehrte Bildung von Ammoniumsalzen ist unerwünscht, da die Ausbeute an Hydroxylammoniumsalzen sinkt und zudem bei der Weiterverarbeitung unerwünschte Mengen an Ammoniumsalzen abgetrennt werden müssen.

In der DE-C-968 363 wird ein einstufiges Verfahren zur Herstellung von Hydroxylammoniumsalzen beschrieben, wonach man durch Zugabe von Säure am Ende der Reaktion einen $p_H$-Wert von weniger als 2,5 einstellen soll. Wenn man dieser Empfehlung folgen würde, müsste man in einem mehrstufigen Verfahren durch direkte Zugabe von Säure in die letzte Reaktionsstufe den geforderten $p_H$-Wert aufrechterhalten.

Es war deshalb die technische Aufgabe gestellt, die kontinuierliche Herstellung von Hydroxylammoniumsalzen in mehreren hintereinander geschalteten Reaktionszone so zu gestalten, dass auch in der letzten Reaktionszone eine vermehrte Bildung an Nebenprodukten vermieden wird.

Diese Aufgabe wird gelöst in einem Verfahren zur kontinuierlichen Herstellung von Hydroxylammoniumsalzen durch katalytische Reduktion von Stickstoffmonoxid mit Wasserstoff in verdünnten wässrigen Lösungen von Minderalsäuren in Gegenwart von suspendierten Edelmetallkatalysatoren bei erhöhter Temperatur in mehreren hintereinander geschalteten Reaktionsstufen, wobei man in der letzten Reaktionsstufe einen pH-Wert von < 2,0 einhält und mittels des pH-Wertes der letzten Reaktionsstufe den Zufluss an frischer wässriger Säure in die erste Reaktionsstufe steuert.

Das neue Verfahren hat den Vorteil, dass in der letzten Reaktionszone eine vermehrte Bildung an Nebenprodukten vermieden wird. Ferner hat das neue Verfahren den Vorteil, dass die Bildung von explosiblen Abgasgemischen bei einer Arbeitsweise unter erhöhtem Druck vermieden wird. Schliesslich hat das neue Verfahren den Vorteil, dass plötzlicher Druckanstieg ausgeschlossen wird durch den auch die vorangehenden Reaktionszonen beeinträchtigt werden.

In der Regel wendet man Wasserstoff und Stickstoffmonoxid im Molverhältnis von 1,5:1 bis 6:1 an. Besonders gute Ergebnisse erhält man, wenn man darauf achtet, dass in den einzelnen Reaktionszonen ein Molverhältnis von Wasserstoff zu Stickstoffmonoxid von 3,5 bis 5:1 aufrecht erhalten wird.

Im allgemeinen verwendet man als Mineralsäuren nichtreduzierende starke Mineralsäuren wie Perchlorsäure, Salpetersäure, Schwefelsäure oder Phosphorsäure. Geeignet sind auch deren sauren Salze wie Ammoniumbisulfat. Besonders bevorzugt wird Schwefelsäure und/oder Ammoniumbisulfat verwendet. In der Regel geht man von 4 bis 6 normalen wässrigen Lösungen der Säuren aus und lässt im Verlauf der Reaktion die Säurekonzentration abfallen.

Die Umsetzung führt man vorteilhaft bei Temperaturen von 30 bis 80 °C durch. Besonders bewährt haben sich Temperaturen von 40 bis 60 °C. In der Regel führt man die Umsetzung bei Atmosphärendruck oder erhöhtem Druck, z.B. bis zu 300 bar, durch.

Als Edelmetallkatalysatoren verwendet man vorteilhaft Platinkatalysatoren, die im allgemeinen auf Träger aufgebracht verwendet werden. Besonders bewährt hat sich Platin auf Kohleträger, insbesondere auf Graphit. Die Katalysatoren werden in fein verteilter Form als Suspension angewandt. Vorzugsweise hat ein solcher Katalysator einen Gehalt von 0,2 bis 5 Gewichtsprozent Platin. Vorteilhaft enthalten die Katalysatoren zusätzlich ein oder mehrer Elemente der 5. und/oder 6. Gruppe des Periodischen Systems mit einem Atomgewicht > 31, ferner Blei und/oder Quecksilber als vergiftende Mittel. Geeignete Katalysatoren und deren Herstellung werden beispielsweise beschrieben in den DE-C-1 088 037, 920 963, 956 038 und 945 752.

Die Umsetzung wird in mehreren hintereinander geschalteten Reaktionszonen durchgeführt. In der Regel wendet man 2 bis 10, insbesondere 4 bis 8 Reaktionszonen an. Vorteilhaft stehen die Reaktionszonen kommunizierend miteinander in Verbindung. Zweckmässig führt man der ersten Reaktionszone frische verdünnte wässrige Lösung von Mineralsäure, die der Katalysator suspendiert enthält, zu. Die katalysatorhaltige Säurelösung durchfliesst dann nacheinander die einzelnen Reaktionszonen, wobei der Gehalt an Hydroxylammoniumsalz unter Verbrauch der Säure fortlaufend zunimmt. Der letzten Reaktionszone wird das Reaktionsgemisch in dem Masse entnommen, wie in der ersten Reaktionszone frische wässrige Säure zugeführt wird. Vorteilhaft beschickt man die Reaktionszonen, ausgenommen die erste, jeweils getrennt mit einem Gemisch aus Stickstoffmonoxid und Wasserstoff, sammelt die entstehenden Abgase und leitet sie, vorteilhaft nach Ergänzen mit Stickstoffmonoxid, in die erste Reaktionszone ein.

Ein wesentliches Merkmal der Erfindung ist es, dass man in der letzten Reaktionszone, d.h. in dem im wesentlichen aus einer wässrigen Lösung von Hydroxylammoniumsalzen, Ammoniumsalzen, Säure, Trägerkatalysator und gelöstem Stickstoffmonoxid und Wasserstoff bestehenden Reaktionsgemisch, einen pH-Wert von < 2.0 vorteilhaft von 0.9 bis 1.8 einhält. Die Einstellung des pH-Wertes in der letzten Reaktionszone erfolgt durch absatzweise oder kontinuierliche Zugabe von zusätzlicher Säure in der Weise, dass man den Zulauf von frischer wässriger Mineralsäure in die erste Reaktionszone über den pH-Wert in der letzten Reaktionszone steuert. Bei der Verwendung von Schwefelsäure hat es sich als günstig erwiesen in der letzten Reaktionszone einen pH-Wert von 1.0 bis 1.5 einzuhalten. Die Steuerung des Zulaufs an frischer Mineralsäure über den pH-Wert in der letzten Reaktionszone ist insofern bemerkenswert, als ein rascher Einfluss auf den pH-Wert der letzten Reaktionszone infolge der langen Verweilzeit nicht zu erwarten war. Es war vielmehr davon auszugehen, dass starke pH-Wert-Schwankungen in der letzten Reaktionszone eintreten. Die letztgenannte Arbeitsweise hat insbesondere auch den Vorteil, dass einerseits die eingangs erwähnten Nachteile vermieden werden, andererseits ein überhöhter Restgehalt an Mineralsäure vermieden wird, die bei der Weiterverarbeitung der Hydroxylammoniumsalzlösung unerwünscht ist.

Hydroxylammoniumsalze, die nach dem Verfahren der Erfindung erhalten werden, eignen sich zur Herstellung von Cyclohexanonoxim, einer Ausgangsverbindung für die Herstellung von Caprolactam.

Das Verfahren nach der Erfindung sei am folgenden Beispiel veranschaulicht.

Beispiel

Acht hintereinander geschaltete Reaktionsgefässe werden mit je 6000 1, 4,5 n-Schwefelsäure und 150 kg eines 1 Gewichtsprozent Platin enthaltenen Platingrafitkatalysators beschickt. Bei geschlossenen Verbindungsleitungen wird der Inhalt der Reaktionsgefässe mit einem Gemisch aus Wasserstoff und Stickstoffmonoxid im Molverhältnis 1,7:1 beaufschlagt, so dass sich eine abnehmende Konzentration an freier Schwefelsäure in den einzelnen Reaktionsgefässen ausbildet. Bei nunmehr geöffneten Verbindungsleitungen zwischen den einzelnen Reaktionsgefässen wird 4,5 n-Schwefelsäure zusammen mit Platinkatalysator in den ersten Reaktor eingeführt und gleichzeitig die entsprechende Menge an Hydroxylammoniumsulfatlösung und Katalysator dem 8. Reaktor entnommen. Der Katalysator wird abfiltriert und wieder der frischen Schwefelsäure zugefügt. Die Zugabe von Stickstoffmonoxid und Wasserstoff erfolgt in jeden der Reaktoren 2 bis 8 getrennt, die Abgase werden gesammelt und nach Ergänzen mit Stickstoffmonoxid dem Reaktor 1 zugeführt. Die Umsetzung wird bei 40 °C und 1 bar durchgeführt. Dem Reaktor 8 wird fortlaufend über einen äusseren Kreislauf Reaktionsgemisch entnommen und der pH-Wert gemessen. Sobald der pH-Wert 1.3 erreicht, wird durch eine mit dem pH-Meter verbundene Regelung, die Menge der in Reaktor 1 zufliessenden Schwefelsäure erhöht. Erreicht der pH-Wert des Reaktionsgemisches im Reaktor 8 den Wert 1.1, so wird über die Regelung die zufliessende Menge an Schwefelsäure im Reaktor 1 vermindert. Das im Reaktor 8 entstehende Abgas hat einen Gehalt an Distickstoffoxid von 10 Vol.% und das abfliessende Reaktionsgemisch hat einen Gehalt von Ammoniumsulfat von 0.1 Gewichtsprozent.

Lässt man den pH-Wert im Reaktor 8 auf 2.0 ansteigen, so erhöht sich der Gehalt an Distickstoffoxid im Abgas auf 15 Vol.% und der Gehalt an Ammoniumsulfat in der ausgetragenen Reaktionslösung auf 0.2 Gewichtsprozent.

**Patentansprüche**

1. Verfahren zur kontinuierlichen Herstellung von Hydroxylammoniumsalzen durch katalytische Reduktion von Stickstoffmonoxid mit Wasserstoff in verdünnten wässrigen Lösungen von Mineralsäuren in Gegenwart von suspendierten Edelmetallkatalysatoren bei erhöhter Temperatur in mehreren hintereinander geschalteten Reaktionsstufen, dadurch gekennzeichnet, dass man in der letzten Reaktionsstufe einen pH-Wert von < 2,0 einhält und mittels des pH-Wertes der letzten Reaktionsstufe den Zufluss an frischer wässriger Säure in die erste Reaktionsstufe steuert.

2. Verfahren nach Anspruch 1, dadurch gekennzeichnet, dass man in der letzten Reaktionsstufe bei Verwendung von Schwefelsäure als Mineralsäure einen pH-Wert von 1.0 bis 1.5 einhält.

**Claims**

1. A process for the continous preparation of hydroxylammonium salts by catalytic reduction of nitric oxide with hydrogen in a dilute aqueous solution of a mineral acid in the presence of a suspended noble metal catalyst at an elevated temperature in a plurality of reaction zones connected in series, wherein a pH of < 2.0 is maintained in the last reaction zone, and the flow of fresh aqueous acid into the first reaction zone is controlled by means of the pH in the last reaction zone.

2. A process as claimed in claim 1, wherein a pH of from 1.0 to 1.5 is maintained in the last reaction zone when sulfuric acid is used as the mineral acid.

## Revendications

1. Procédé pour la préparation en continu de sels d'hydroxylammonium, par réduction catalytique de bioxyde d'azote avec de l'hydrogène, en solution aqueuse diluée de sels minéraux, en présence de catalyseur en métal précieux en suspension, à température élevée, en plusieurs étapes de réaction se succédant les unes après les autres, caractérisé par le fait que l'on maintient, dans la dernière étape de réaction, une valeur de pH de <2,0 et que, au moyen de la valeur du pH de la dernière étape de réaction, on commande l'amenée d'acide aqueux frais dans la première étape de réaction.

2. Procédé selon la revendication 1, caractérisé par le fait que, dans la dernière étape de réaction, en utilisant, comme acide minéral, de l'acide sulfurique, on maintient une valeur de pH de 1,0 à 1,5.